# FASCICULE DE BREVET EUROPEEN

(11) **EP 1 869 534 B1**
(45) Date de publication et mention de la délivrance du brevet: **30.12.2009**
(21) Numéro de dépôt: 05757168.9
(22) Date de dépôt: 13.04.2005
(51) Int. Cl.: G05D 16/16

(54) **ENSEMBLE VALVE RÉGULÉ POUR SYSTÈMES D'EXTINCTEURS D'INCENDIE**
VENTILEINSTELLEINRICHTUNG FÜR FEUERLÖSCHSYSTEME
VALVE ADJUSTING DEVICE FOR FIRE EXTINGUISHING SYSTEMS

(43) Date de publication de la demande: 26.12.2007
(73) Titulaire: Siemens S.A.S., 93527 Saint-Denis cedex 2 (FR)
(72) Inventeur: BEUCHER, Stéphane, F-78500 SARTROUVILLE (FR); DUSSER, Bernard, F-28130 SAINT MARTIN DE NIGELLES (FR); GIRAUD, Nicolas, F-78640 NEAUPHLE LE CHATEAU (FR)
(74) Mandataire: Fischer, Michael
(86) Numéro de dépôt international: PCT/FR2005/000892
(87) Numéro de publication internationale: WO 2006/108931

(56) Documents cités:
- WO-A-2004/079678
- US-A- 2 398 775
- US-A- 4 516 600

## Description

### Historique de l'invention

Les différentes versions décrites ci-après portent de façon générale sur un ensemble valve régulé. Ces versions portent plus particulièrement sur un ensemble valve et une méthode de fourniture d'un fluide à un niveau de pression prédéterminée.

Dans un champ d'application donné en exemple, un ensemble valve fait partie d'un système d'extincteur d'incendie. La demande de brevet international WO 2004079678 expose un système à gaz inerte sous basse pression pour la suppression des risques et la protection d'un local contre l'incendie ou d'autres dangers. Le système comprend plusieurs bouteilles à gaz inerte sous pression, équipée chacune d'un ensemble valve et contenant un gaz inerte à une pression de l'ordre de 300 bars. Chaque ensemble valve est connecté par un conduit à un collecteur de distribution. Ces ensembles valve sont conçus pour débiter le gaz inerte des bouteilles à une pression d'environ 10-100 bars pendant une grande partie de leur durée potentielle de fourniture de gaz. Chaque ensemble valve comporte un corps de valve et un membre d'obturation mobile muni de canaux et d'un conduit de passage de gaz admettant le gaz de la bouteille dans des chambres d'équilibrage et de modulation. La pression de gaz de la bouteille et un ensemble ressort agissent par le membre pour maintenir la valve en position ouverte. Cela est contrebalancé par une pression de gaz dans les chambres d'équilibrage et de modulation. Lorsqu'un danger est détecté, les ensembles valve sont actionnés par l'évacuation de gaz des chambres de modulation, en permettant un apport de gaz des bouteilles. Tandis qu'une décharge de gaz a lieu, du gaz entre dans les chambres de modulation et en sort, de manière à réaliser un débit de gaz à pression constante. Vers la fin de la décharge ce gaz, la poussée de l'ensemble ressort devient prédominante et maintient l'ensemble valve ouvert jusqu'à ce que tout le gaz soit déchargé.

### Résumé de certains aspects de l'invention

Dans l'ensemble valve exposé dans la demande de brevet WO 2004079678, la pression dans les chambres d'équilibrage et de modulation est causée par une entrée de gaz dans le membre d'obturation par les orifices situés à une extrémité inférieure, puis par son, écoulement à travers des passages intérieurs du membre d'obturation dans les chambres. Pendant la décharge de gaz, le flux de gaz entre entrée et sortie passe par ces orifices. Les orifices sont donc exposés à une pression dynamique qui affecte le flux de gaz dans les chambres et la pression à l'intérieur de ces chambres. Cela influence négativement la régulation de la valve et la pression de sortie de celle-ci. Le but des différentes versions décrites ci-après est d'améliorer un ensemble valve de manière que la pression de sortie soit plus constante dans un laps de temps prédéterminé.

En conséquence, un des aspects comprend un ensemble valve qui comporte un corps de valve ayant une section d'entrée à raccorder à un réservoir de fluide sous pression, et une sortie à raccorder sur le système de tuyauterie. Un piston est mobile dans le corps de valve le long d'un premier axe entre une position ouverte qui permet une communication de fluide entre une section d'entrée et la sortie, et une position fermée qui interrompt la communication de fluide. Le piston a une section d'extrémité, une section d'obturation et une section médiane située entre la section d'extrémité et la section d'obturation. Une cavité s'étend le long du premier axe et reçoit le piston à l'intérieur du corps de valve. La cavité comporte une chambre supérieure entre la section d'extrémité et la section médiane, une chambre intermédiaire entre la section médiane et la section d'obturation, et une chambre inférieure entre une paroi de la cavité et la section d'obturation. Le piston est configuré de manière à empêcher un échange de fluide entre les chambres. Un ressort logé à l'intérieur de la chambre supérieure est configuré pour exercer une force de rappel sur le piston, qui le ramène à la position ouverte. Un organe d'actionnement est accouplé au corps de valve et configuré pour fournir, lors de l'actionnement, un premier flux de fluide hors de la cavité allant de la section d'entrée à la chambre supérieure. Le premier flux produit un accroissement de pression dans la chambre supérieure jusqu'à ce que la pression y soit égale à celle du réservoir, afin que la force de rappel du ressort ramène le piston à la position ouverte. A la position ouverte, un flux principal de fluide coule depuis la section d'entrée jusqu'à la sortie, en traversant la chambre intermédiaire.

### Brève description des différentes vues des dessins

Ces divers aspects, avantages et nouvelles caractéristiques des versions décrites ci-après ressortiront d'une lecture de la description détaillée suivante, avec examen des dessins d'accompagnement. Dans les dessins, les mêmes éléments comportent les mêmes chiffres de référence.
La Figure 1 est une vue en perspective d'une version de l'ensemble valve;
La Figure 2 est une vue en coupe verticale de l'ensemble valve selon la ligne A-A de la Figure 1 à une position fermée;
La Figure 3 est une vue en coupe verticale de l'ensemble valve selon la ligne B-B de la Figure 1 à une position fermée;
La Figure 4 est une vue en coupe horizontale de l'ensemble valve selon la ligne C-C de la Figure 2;
La Figure 5 est une vue en coupe verticale de l'ensemble valve selon la ligne A-A de la Figure 1 à une position régulée;
La Figure 6 est une vue en coupe horizontale de l'ensemble valve selon la ligne C-C de la Figure 5;
La Figure 7 est une vue en coupe verticale de l'ensemble valve selon la ligne A-A de la Figure 1 à une position ouverte; et
la Figure 8 est un graphique illustrant la pression de fluide dans la bouteille et la pression du débit, chacune en fonction du temps.

### Description détaillée de certaines versions de l'invention

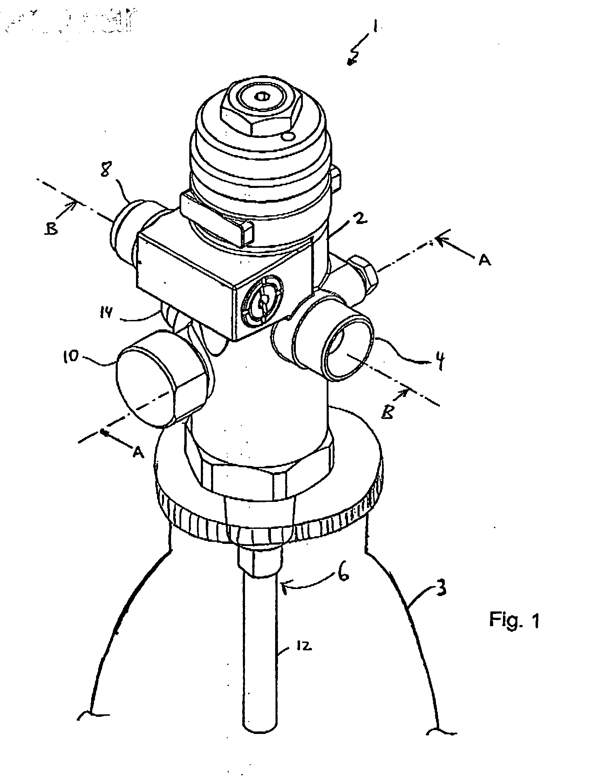

La Figure 1 montre une illustration schématique d'une version d'un ensemble valve 1. L'illustration représente différentes caractéristiques de l'ensemble valve 1 pour un exemple d'utilisation en relation avec un système de sécurité anti-incendie. Dans une version du système de sécurité anti-incendie, l'ensemble valve 1 est connecté à un réservoir de fluide et à un système de tuyauterie configuré pour distribuer du fluide à un ou plusieurs sites, par exemple des locaux à l'intérieur d'un bâtiment. Le réservoir peut être une bouteille cylindrique métallique à paroi forte 3 contenant le fluide à une pression comprise entre 200 bars et 500 bars environ, par exemple 300 bars. Le fluide peut être un agent qui supprime et/ou éteint le feu. Par exemple, le fluide peut inclure un gaz inerte (tel que azote, argon) ou un mélange de deux ou plusieurs gaz inertes, ou tout autre fluide ayant des propriétés d'extinction ou suppression du feu.

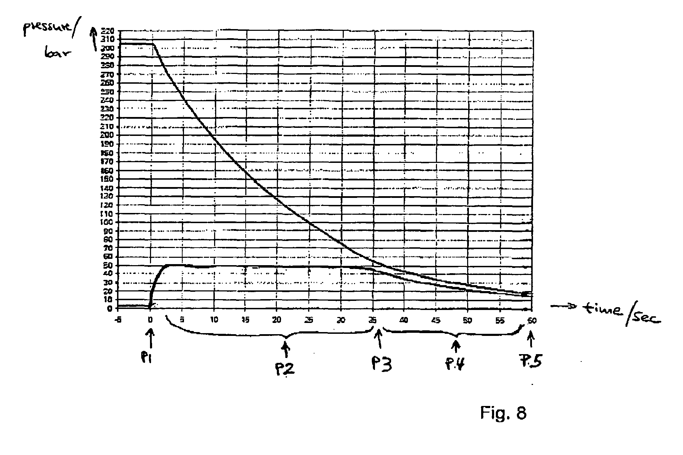

En service, par exemple dans la détection de chaleur, fumée ou feu excessifs, l'ensemble valve 1 est activé pour émettre le fluide dans un temps prédéterminé, à une pression sensiblement constante et inférieure à la pression de fluide dans la bouteille 3. L'ensemble valve 1 peut débiter le fluide à une pression sensiblement constante comprise entre 10 et 100 bars environ en une ou plusieurs minutes environ. Dans une version, l'ensemble valve 1 débite le fluide à une pression sensiblement constante d'environ 50 bars en 40 secondes, comme illustré en Figure 8 et décrit ci-après de façon plus détaillée. Les milieux spécialisés en ce domaine apprécieront le fait que l'ensemble valve 1 peut être utilisé non seulement en relation avec un système de sécurité anti-incendie, mais aussi dans tout autre système où un fluide à haute pression doit être débité à une pression plus basse et sensiblement constante dans un temps prédéterminé.

Aux fins d'illustration en Figure 1, l'ensemble valve 1, connecté à la bouteille 3, comporte un corps de valve 2. Le corps de valve 2 a une forme généralement oblongue, avec une section inférieure et une section supérieure opposées. Dans toute cette description, les termes relationnels tels que "inférieur", "supérieur", "au-dessous", "en bas" ou similaires sont utilisés sans limitation pour désigner des particularités de l'ensemble valve 1, cet ensemble valve 1 étant vu debout ou en position sensiblement verticale. Cependant, il est entendu dans les milieux spécialisés en ce domaine que de tels termes s'appliquent également lorsque l'ensemble valve 1 est placé dans une autre orientation. En service, la section inférieure est proche de la bouteille 3 et comporte un filetage extérieur pour visser l'ensemble valve 1 sur la bouteille 3. Dans une version, le corps de valve 2 est réalisé en laiton.

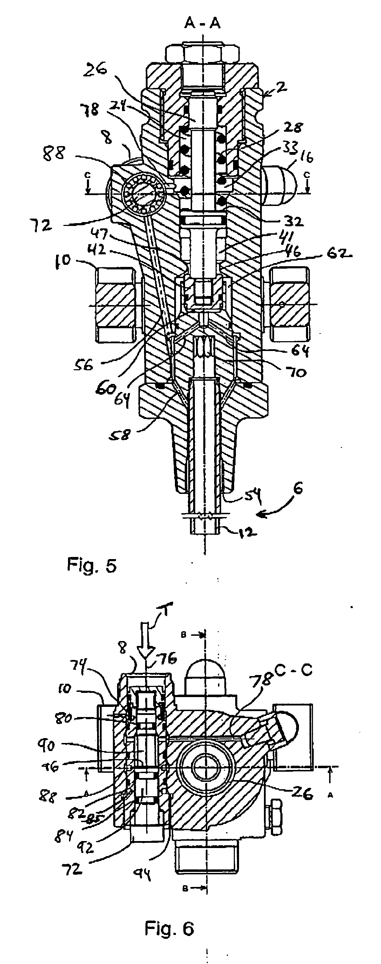

Par ailleurs, l'ensemble valve 1 comprend un organe d'actionnement 8, une section d'entrée 6 comportant un tube 12, une sortie 4, un orifice de branchement 10, par exemple pour un manomètre et un élément de sûreté 14, par exemple un disque qui se rompt à une pression prédéterminée. Dans la version illustrée, la section d'entrée 6 s'étend dans une partie supérieure de la bouteille 3. La sortie 4 est configurée pour un raccordement au système de tuyauterie. L'organe d'actionnement 8 est situé sur un côté du corps de valve 2, et peut être déclenché par un signal émanant d'un poste central ou d'un système de détecteur d'incendie qui active un mécanisme déclenchement (par ex., pneumatique, électrique ou mécanique) appliquant une force sur l'organe d'actionnement 8 (cf., par ex., la flèche T en Figure 6).

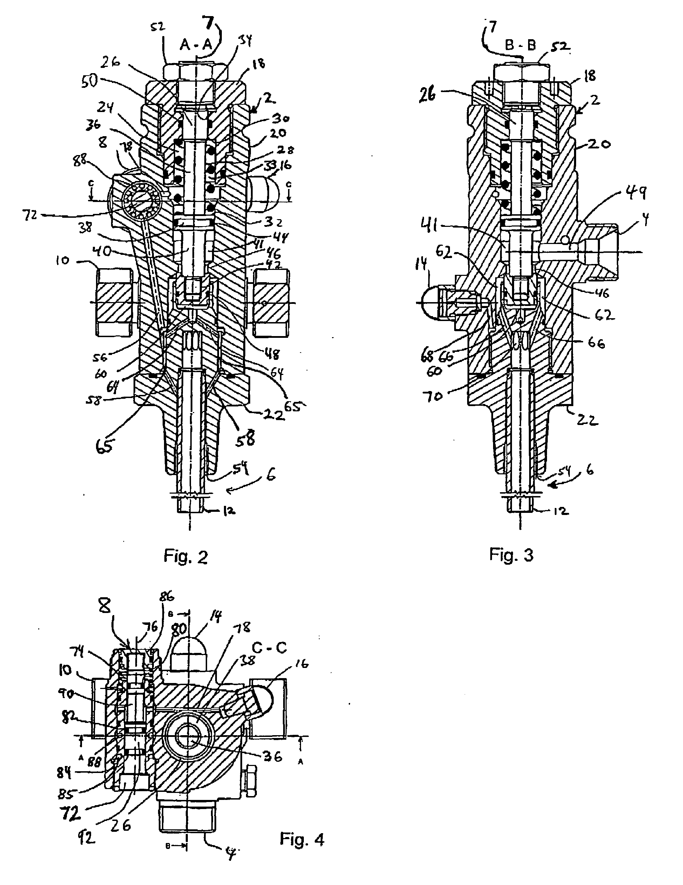

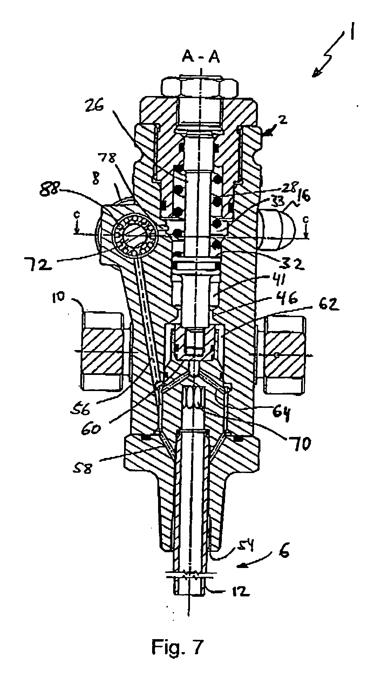

La Figure 2 est une vue en coupe verticale de l'ensemble valve 1 le long de la ligne A-A de la Figure 1 à une position fermée. Une partie supérieure 18 et une partie inférieure 22 sont reliées à une partie médiane 20, et forme dans l'essentiel le corps de valve 2. Les parties 18, 20, 22 peuvent être connectées par vissage et scellement des parties 18, 22 à la partie médiane 20. Une cavité oblongue et circulaire 24 existe dans les parties 18, 20 et s'étend le long d'un axe vertical 7 partant de la partie supérieure 18 et traversant la partie médiane 20. La cavité 24 est configurée pour contenir un piston 26, mobile dans la cavité 24 le long de l'axe 7 et entre une position fermée (Figures 2 - 4) et une position ouverte ( Figures 5 et 7).

Le piston 26, de construction massive, a une forme généralement oblongue, avec plusieurs sections: une section d'extrémité 34, les première et seconde sections principales 36, 40, une section médiane 38 et une section d'obturation 42. La section d'obturation 42 est opposée à la section d'extrémité 34, et est connectée à la seconde section principale 40. La première section principale 36 connecte la section d'extrémité 34 et la section médiane 38, elle-même connectée à une seconde section principale 40. La section médiane 38 est circulaire et a un diamètre choisi pour correspondre au diamètre de la cavité 24. Un joint torique 44 est monté sur une circonférence de la section médiane 38 pour établir le contact avec une paroi intérieure de la cavité 24.Les diamètres des sections d'extrémité, principale et d'obturation 34, 36, 40, 42 sont plus petits que celui de la section médiane 38, tandis que le diamètre de la section d'obturation 42 est plus grand que celui de la seconde section principale 40.

Aux fins d'illustration, la cavité 24 peut être considérée comme enveloppant une cavité supérieure et une cavité inférieure divisées par un étranglement 46. La cavité supérieure contient la section d'extrémité 34, la première section principale 36, la section médiane 38 et une partie substantielle de la seconde section principale 40. La seconde section principale 40 s'étend à travers l'étranglement 46 jusque dans la cavité inférieure, qui comprend la section d'obturation 42. L'étranglement 46 a un diamètre plus grand que celui de la seconde section principale 40, mais plus petit que le diamètre de la section d'obturation 42. L'étranglement 46 et la section d'obturation 42 obstruent et désobstruent la communication de fluide entre la section d'entrée 6 et la sortie 4.

Dans une version, la section d'obturation 42 comprend une pièce en polymère (par ex., PE, HDPE, ABS) garnissant le corps massif du piston 26. La pièce de polymère de la section d'obturation 42 a un diamètre choisi pour correspondre à celui de la cavité inférieure. Un joint torique 48 est monté sur une circonférence de la pièce en polymère pour établir le contact avec une paroi intérieure de la cavité inférieure.

La cavité supérieure comprend un ressort 28 qui s'étend entre un rebord 30 dans la partie supérieure 18 et une surface supérieure 32 de la section médiane 38. La section de la cavité supérieure où se trouve le ressort 28 est désignée comme chambre supérieure 33. Le ressort 28 est configuré pour repousser le piston 26 vers le bas et écarter la pièce en polymère de la section d'obturation 42 de l'étranglement 46 ; ainsi, le ressort 28 repousse le piston 26 vers la position ouverte.

La cavité supérieure comprend en outre une section qui s'étend entre la section médiane 38 et une zone définie par l'étranglement 46. Cette section est désignée, ci-après, comme chambre intermédiaire 41.

A l'intérieur de la partie supérieure 18, la cavité 24 comporte une partie à diamètre réduit pour supporter la section d'extrémité 34 du piston 26. La partie à diamètre réduit de la cavité 24 est choisie pour correspondre au diamètre de la section d'extrémité 34. Un joint torique 50 est monté sur une circonférence de la section d'extrémité 34 pour établir le contact avec une paroi intérieure de la partie à diamètre réduit de la cavité 24. Un bouchon de stop 52 ferme la cavité 24 et limite la course verticale du piston 26 dans la cavité 24.

Il est prévu que le piston 26 et la cavité 24 soient dimensionnés pour permettre le déplacement du piston 26 dans la cavité 24. Plus particulièrement, la section d'extrémité 34, la section médiane 38 et la section d'obturation 42, ainsi que les joints toriques respectifs 50, 44, 48 sont configurés pour supporter le piston 26 dans la cavité 24, et établir le contact avec les parois intérieures adjacentes de la cavité 24, et permettre le déplacement vertical du piston 26.

En plus du piston 26 et de la cavité 24, le corps de valve 2 comprend plusieurs canaux de communication de fluide. Dans une version, et comme partie de la section d'entrée 6, la partie inférieure 22 comprend un canal d'entrée 54 qui est partagé de deux parts et qui s'étend, dans une version, le long du tube 12 et à proximité de la section d'entrée 6 opposée aux côtés du tube 12. Un peu plus loin de la section d'entrée 6, le canal 54 s'étend le long et autour du tube 12. Le canal 54 reçoit du fluide de la bouteille 3 pour établir un flux pilote avec une pression pilote associée pendant le fonctionnement de l'ensemble valve 1, comme décrit ci-dessous. Les deux canaux 58 dans la partie inférieure 22 sont en communication de fluide avec le canal d'entrée 54.

Un espace dans une zone où la partie inférieure 22 et la partie médiane 20 sont connectées forme un canal 65 qui est partagé de deux parts. La partie inférieure 22 comprend en outre un canal 64 qui s'étend depuis le canal 65 jusqu'à une chambre inférieure 60 de la cavité 24.

La partie médiane 20 comprend un canal 56 qui est en communication de fluide avec le canal 58 de la partie inférieure 22, en passant par le canal 65. Le canal 56 s'étend entre le canal 65 et l'organe d'actionnement 8. La chambre inférieure 60 est délimitée par un fond de la section d'obturation 42 et le fond et les parois latérales de la cavité 24, et elle est en communication de fluide avec le canal 64.

Les canaux 54, 58, 64, 65 font entrer le fluide dans la chambre inférieure 60, avec application d'une pression pilote sur le piston 26. La pression pilote est sensiblement la même que celle de la bouteille 3, par exemple 300 bars lorsque la bouteille 3 est encore pleine. Il est prévu que la pression pilote suive la pression de la bouteille 3. Entre autres fonctions, la pression pilote repousse le piston 26 vers le haut, de sorte que la section d'obturation 42 ferme l'étranglement 46.

La Figure 3 est une vue en coupe verticale de l'ensemble valve 1 le long d'une ligne B-B de la Figure 1. Cette vue montre des canaux additionnels dans la partie médiane 20 du corps de valve 2. Un canal 62 s'étend entre la partie médiane 20 et la partie inférieure 22 dans une zone entourant la cavité inférieure, c'est-à-dire la partie de la cavité 24 au-dessous de l'étranglement 46. Plusieurs canaux séparés 66, dans une version huit canaux, s'étendent entre le canal 62 et huit orifices 70 près d'une extrémité supérieure du tube 12. Le canal 62 est accouplé à la cavité inférieure et aux canaux 66 et orifices 70. En fonctionnement, les canaux 62,66 font entrer le fluide dans la cavité 24, d'où il sort par la sortie 4 à une niveau de pression prédéterminée, par exemple de 50 bars environ. Ainsi, lorsque l'ensemble valve 1 est en position ouverte, le fluide afflue de la bouteille 3 par le tube 12, les orifices 70 et les canaux 66, 62, vers la sortie 4. Cet écoulement constitue un flux principal de l'ensemble valve 1, et est séparé du fluide coulant dans les canaux 54, 56, 58, 64, 65.

La Figure 4 est une vue en coupe horizontale de l'ensemble valve 1 le long d'une ligne C-C de la Figure 2, pour illustrer de façon plus détaillée l'organe d'actionnement 8. L'organe d'actionnement 8 comprend un piston 72 positionné dans un alésage et configuré pour se déplacer dans l'alésage selon un axe 76 sensiblement perpendiculaire à l'axe 7 et le long duquel le piston 26 est mobile. A proximité d'une section d'activation 86 de l'organe d'actionnement 8, un ressort 74 repousse le piston 72 à une position inactive à laquelle le piston 72 repose sensiblement à l'intérieur de l'alésage. L'organe d'actionnement 8 peut être activé par application d'une force à la section d'activation 86 (cf. flèche T en Figure 6) pour comprimer le ressort 74 et pousser le piston 72 à une position active illustrée en Figure 6.

Le piston 72 comporte des joints toriques 80, 82, 84 montés à sa circonférence pour définir différentes sections 90, 92. La section 90 est délimitée par les joints toriques 80 et 82, et la section 92 par les joints toriques 82 et 84. A la position inactive indiquée en Figure 4, le fluide peut entrer par plusieurs orifices 88 dans l'espace défini par la section 92. Dans la version, douze orifices 88 ayant chacun un diamètre d'environ 0,2 mm entourent le piston 72 et sont en communication de fluide avec le canal 56. Comme les joints toriques 82, 84 obturent la section 92, le fluide ne peut s'échapper de l'espace défini par la section 92.

En résumé, les Figures 2 - 4 représentent l'ensemble valve 1 à la position fermée. A la position fermée, la bouteille 3 garde le fluide à une pression d'environ 300 bars. Le fluide se trouvant dans les canaux 56, 58, 64, 65 et dans la chambre 60 est sensiblement à la même pression d'environ 300 bars, et refoule le piston 26 vers le haut contre la force du ressort 28, qui rappelle le piston 26 en bas à la position ouverte. Comme la force résultant de la pression du fluide est supérieure à celle du ressort, la section d'obturation 42 est pressée contre l'étranglement 46 maintenant l'ensemble valve 1 à la position fermée. Il est prévu que la cavité supérieure, y compris la chambre supérieure 33, soit sensiblement exempte de fluide lorsque l'ensemble valve 1 est à la position fermée.

Pour décrire le fonctionnement de l'ensemble valve 1, on se réfère aux Figures 5 - 8. Plus particulièrement, l'activation et la régulation de l'ensemble valve 1 est décrit avec référence à la Figure 5, qui est une vue en coupe verticale de l'ensemble valve 1 selon une ligne A-A de la Figure 1, et à la Figure 6, qui est une vue en coupe horizontale de l'ensemble valve 1 le long d'une ligne C-C de la Figure 5. La position finale de l'ensemble valve 1 est représentée en Figure 5, qui est une vue en coupe verticale de l'ensemble valve 1 selon une ligne A-A de la Figure 1. On se réfère en outre à la Figure 8, qui est un graphique illustrant la pression de fluide dans la bouteille 3, ainsi que la pression de sortie, chacune en fonction du temps.

Pendant une première phase de l'activation (cf. P1 en Figure 8), une force de déclenchement est appliquée au piston 72 pour comprimer le ressort 74 et déplacer le piston 72 le long de l'axe 76. En Figure 6, le sens d'application de la force de déclenchement est indiqué par une flèche T. Avec le piston 72, se déplacent aussi les joints toriques 80, 82, 84. Pendant ce déplacement, le joint torique 82 se déplace au-delà de la zone des douze orifices 88, et le fluide se trouvant dans la section 92 s'échappe par plusieurs (par exemple, quatre) orifices 85 et un canal 94 formé autour du piston 72. Comme le joint torique 82 n'obture plus le passage du fluide, le fluide entre dans l'espace entourant la section 90 et passe par le canal 78 dans la chambre supérieure 33 de la cavité 24.

Dans une version, une fois déclenché, le processus d'activation de l'ensemble valve 1 ne peut plus être arrêté, même si la force de déclenchement est retirée. Il en est ainsi parce que la pression de fluide agit sur une surface 96 d'une arête du piston 72 et verrouille la position du piston 72. La pression de fluide dans la chambre supérieure 33 pousse le piston 26 vers le bas, tandis que la même force de pression de fluide dans la chambre inférieure 60 presse le piston 26 vers le haut. Il en résulte un équilibre des forces parce que les mêmes pressions agissent sur des surfaces équivalentes. Toute pression de fluide résiduelle qui était bloquée par les joints toriques 82, 84 est évacuée par les quatre orifices 85 et le canal 94.

Pendant une seconde phase de l'activation, les forces causées par les pressions de fluide dans la chambre inférieure 60 et la chambre supérieure 33 s'annulent mutuellement. La force du ressort 28 demeure et repousse le piston 26 vers le bas pour écarter la section d'obturation 42 de l'étranglement 46, ouvrant ainsi l'ensemble valve 1. Le fluide, maintenant, afflue par le tube 12 et les canaux 62, 66 (Figure 3) par un passage 47 (Figure 5) créé par l'ouverture entre la section d'obturation 42 et l'étranglement 46. Le fluide pénètre dans la chambre intermédiaire 41 entre la section d'obturation 42 et la section médiane 38.

Un passage 49 (Figure 3) connecte la sortie 4 et la chambre intermédiaire 41. Le diamètre du passage 49 est plus petit que le diamètre de la sortie 4 en service connectée à un système de tuyauterie. La limitation causée par le passage 49 cause un accroissement de pression de fluide dans la chambre intermédiaire 41. La pression de fluide accrue continue à agir sur le piston 26, indépendamment de la vitesse d'écoulement (m3/sec) dans le système de tuyauterie accouplé à la sortie 4.

Lors d'une activation, l'ensemble valve 1 est configuré pour réguler la sortie de fluide (cf. P2 en Figure 8). Au début, c'est-à-dire peu après l'activation, le piston 26 se déplace seulement à peine, par exemple de quelques dixièmes de millimètre. Le piston 26 est soumis à deux forces opposées; la force du ressort 28 et la force causée par la pression de fluide dans la chambre intermédiaire 41, qui correspond à la pression du système de tuyauterie accouplé. Au fur et à mesure que la pression de fluide s'accroît dans la chambre intermédiaire 41, en raison de l'écoulement de fluide dans le passage 47, la force agissant sur le piston 26 par dessous devient supérieure à la force du ressort qui repousse la section d'obturation 42 vers l'étranglement 46 pour fermer l'ensemble valve 1. En conséquence, la pression dans la chambre intermédiaire 41 diminue, parce que le flux s'échappant par la sortie 4 est plus grand que l'afflux dans la chambre intermédiaire 41. Au fur et à mesure que la pression décroît, la force agissant sur le piston 26 par dessous devient inférieure à la force du ressort, de sorte que la force du ressort est suffisante pour repousser le piston 26 vers le bas et ouvrir l'ensemble valve 1. Cela cause de nouveau un accroissement de pression dans la chambre intermédiaire 41.

Pendant le processus de décharge, la pression dans la bouteille 3 diminue et s'approche de la pression de fluide à la sortie 4. A un certain point dans le temps (cf. P3 en Figure 8), la pression de la bouteille est sensiblement la même que la pression de fluide à la sortie 4. La force du ressort devient plus élevée que la force causée par la pression de fluide dans la chambre intermédiaire 41, et ouvre complètement l'ensemble valve 1 (cf. P3 en Figure 8).

La pression de fluide à la sortie 4 suit alors la pression de fluide décroissante dans la bouteille 3 (cf. P4 en Figure 8). Il est prévu que les pressions dans la chambre inférieure 60 et dans la chambre supérieure 33 suivent la pression de fluide décroissante dans la bouteille 3.

En Figure 7, l'ensemble valve 1 est à la position finale. La bouteille 3 est pratiquement vide ou, du moins, la pression de fluide dans la bouteille 3 s'est sensiblement réduite (cf. P5 en Figure 8). A la position finale illustrée, le ressort 28 repousse le piston 26 vers le bas, au point qu'il touche le fond de la cavité inférieure. Dès qu'il n'y a plus du tout de pression dans la bouteille 3, le ressort 74 de l'organe d'activation 8 repousse le piston 72 à sa position initiale.

## Revendications

1. Un ensemble valve (1) comportant
un corps de valve (2) qui a une section d'entrée (6) pour la connexion à un réservoir (3) destiné à un fluide sous pression et une sortie (4) pour le raccordement à un système de tuyauterie,
un piston (26) mobile dans le corps de valve (2) le long d'un premier axe (7) entre une position ouverte permettant la communication de fluide entre la section d'entrée 6 et la sortie 4, et une position fermée interrompant ladite communication de fluide, le piston (26) ayant une section d'extrémité (34), une section d'obturation (42) et une section médiane (38) située entre la section d'extrémité (34) et la section d'obturation (42),
une cavité (24) s'étendant le long du premier axe et configurée pour recevoir le piston (26) dans le corps de valve (2),
un ressort (28) dans la cavité (24) et configuré pour exercer une force de rappel sur le piston (26) pour ramener le piston (26) vers la position ouverte, et
un organe d'actionnement (8) accouplé au corps de valve (2), **caractérisé par le fait que**
la cavité (24) comporte une chambre supérieure (33) entre la section d'extrémité (34) et la section médiane (38), une chambre intermédiaire (41) entre la chambre médiane (38) et la section d'obturation (42), et une chambre inférieure (60) entre une paroi de la cavité (24) et la section d'obturation (42),
le piston (26) est configuré pour empêcher un échange de fluide entre les chambres (33, 41, 60),
le ressort (28) est logé dans la chambre supérieure (33), et
l'organe d'actionnement (8) est configuré pour exécuter un actionnement lors d'un premier écoulement de fluide hors de la cavité (24) depuis la section d'entrée (6) jusqu'à la chambre supérieure (33), le premier écoulement causant un accroissement de pression dans la chambre supérieure (33) jusqu'à ce que la pression soit sensiblement la même que celle du réservoir (3), afin que la force du ressort
déplace le piston (26) à la position ouverte, tandis qu'à la position ouverte, un flux principal de fluide coule depuis la section d'entrée (6) par la chambre intermédiaire (41) jusqu'à la sortie (4).

2. L'ensemble valve (1) de la revendication 1, dans lequel le piston (26) comporte une tige pleine.

3. L'ensemble valve (1) de la revendication 2, dans lequel la section d'obturation (42) comporte une pièce en polymère montée sur une tige pleine.

4. L'ensemble valve (1) de la revendication 1, dans lequel la section d'entrée (6) comporte un tube (12) qui s'étend le long du premier axe et guide le flux principal.

5. L'ensemble valve (1) de la revendication 4, comprenant en outre des premier et second canaux principaux (66, 62) entre le tube (12) et la chambre intermédiaire (41) pour guider le flux principal.

6. L'ensemble valve (1) de la revendication 5, dans lequel le tube (12) comporte six orifices, chacun étant relié à l'un des canaux de premier flux principal (66).

7. L'ensemble valve (1) de la revendication 4, dans lequel la section d'entrée (6) comporte un canal d'entrée (54) s'étendant le long du tube (12) et configuré pour guider le premier flux de fluide.

8. L'ensemble valve (1) de la revendication 7, comprenant en outre des premier, second, troisième et quatrième canaux pilotes 58, 65, 64, 56), où les premier, second et troisième canaux pilotes (58, 65, 64) sont connectés entre le canal d'entrée (54) et la chambre inférieure (60) et causent une pression entre la chambre inférieure (60) qui repousse le piston (26) à la position fermée, et où le quatrième canal pilote (56) est connecté entre l'organe d'actionnement (8) et le second canal pilote (65) pour guider le premier flux de fluide à l'organe d'actionnement (8).

9. L'ensemble valve (1) de la revendication 1, dans lequel l'organe d'actionnement (8) comporte un piston d'actionnement (72) mobile dans un alésage le long d'un second axe (76) sensiblement perpendiculaire au premier axe (7), et entre une première position qui interrompt le passage du premier flux de fluide et une seconde position qui permet le passage du premier flux de fluide à la chambre supérieure (33).

10. L'ensemble valve (1) de la revendication 9, comprenant en outre un canal (78) connecté entre l'organe d'actionnement (8) et la chambre supérieure (33) pour guider le premier flux de fluide à la chambre supérieure (33).

11. Une méthode de mise en action d'un ensemble valve (1) pour émettre un fluide à une pression sensiblement constante pendant un temps prédéterminé, l'ensemble valve 1 comportant un corps de valve (2) ayant une section d'entrée (6) connecté à un réservoir (3) destiné à un fluide sous pression et une sortie (4) connectée à un système de tuyauterie, un piston (26) mobile dans le corps de valve (2) entre une position permettant une communication de fluide entre la section d'entrée (6) et la sortie (4), et une position fermée interrompant ladite communication de fluide, une cavité (24) s'étendant le long du premier axe et configurée pour recevoir le piston (26) dans le corps de valve (2), un ressort (28) dans la cavité (24), configuré pour exercer une force de rappel sur le piston (26) pour repousser le piston (26) vers la position ouverte, et un organe d'actionnement (8) accouplé au corps de valve (2), la méthode comprenant
la fourniture de fluide du réservoir (3) à une chambre inférieure (60) située entre une paroi intérieure de la cavité (24) et le piston (26) pour exercer une force qui repousse le piston (26) à la position fermée,
l'activation de l'organe d'actionnement (8) pour causer l'entrée d'un premier flux de fluide, par un itinéraire extérieur à la cavité (24), dans une chambre supérieure (33), délimitée par une paroi supérieure de la cavité (24) et une section médiane (38) du piston (26) pour accroître une première pression dans la chambre supérieure (33) jusqu'à ce qu'elle soit sensiblement égale à la pression du réservoir (3); et
le déplacement du piston (26) à la position ouverte pour causer l'écoulement d'un flux principal de fluide depuis la section d'entrée (6) par une chambre intermédiaire (41) jusqu'à la sortie (4), où la chambre intermédiaire (41) est délimitée par la section médiane (38) et une section d'obturation (42) du piston (26).

12. La méthode de la revendication 11, comprenant en outre un accroissement de pression dans la chambre intermédiaire (41), ladite pression agissant contre ledit déplacement du piston (26) à la position ouverte et tendant à fermer l'ensemble valve (1).

13. La méthode de la revendication 12, où la tendance à fermer l'ensemble valve (1) cause une diminution de pression dans la chambre intermédiaire (41), de sorte que le piston (26) se déplace à nouveau à la position ouverte.

## Claims

1. Valve adjusting device (1) comprising
• a valve body (2) which has
- an inlet section (6) for the connection to a tank (3) dedicated to a fluid under pression and
- an outlet (4) for the connection to a piping system,
• a piston (26) mobile in the valve body (2) along a first axis (7) between an open position allowing the flow of the fluid between the inlet section (6) and the outlet (4), and a closed position turning off said flow of the fluid,
the piston (26) having
- an end section (34),
- a sealing section (42) and
- a median section (38) located between the end section (34) and the sealing section (42),
• a cavity (24) stretching along the first axis and designed to house the piston (26) in the valve body (2),
• a spring (28) in the cavity (24) and designed to exert a return force on the piston (26) to take the piston (26) back to the open position, and
• a triggering component (8) coupled with the valve body (2), **characterized by** the fact that:
- the cavity (24) comprises an upper chamber (33) between the end section (34) and the median section (38), an intermediate chamber (41) between the median chamber (38) and the sealing section (42), and a lower chamber (60) between a wall of the cavity (24) and the sealing section (42),
- the piston (26) is designed to prevent a fluid interchange between the chambers (33, 41, 60),
- the spring (28) is housed in the upper chamber (33), and the triggering component (8) is designed to release, while activated, a first flow of fluid out of the cavity (24) from the inlet section (6) up to the upper chamber (33), the first flow causing a pressure increase in the upper chamber (33) until the pressure is about the same as the one of the tank (3), so that the force of the spring moves the piston (26) to the open position, while in the open position, a principal flow of fluid runs from the inlet section (6) through the intermediate chamber (41) up to the outlet (4).

2. The valve adjusting device (1) of claim 1, wherein the piston (26) comprises a solid stem.

3. The valve adjusting device (1) of claim 2, wherein the sealing section (42) comprises a polymer part assembled on a solid stem.

4. The valve adjusting device (1) of claim 1, wherein the inlet section (6) comprises a tube (12) that stretches along the first axis and channels the principal flow.

5. The valve adjusting device (1) of claim 4, as well comprising first and second principal ducts (66, 62) between the tube (12) and the intermediate chamber (41) to channel the principal flow.

6. The valve adjusting device (1) of claim 5, wherein the tube (12) comprises six ports, each connected to one of the ducts of first principal flow (66).

7. The valve adjusting device (1) of claim 4, wherein the inlet section (6) comprises an inlet duct (54) stretching along the tube (12) and designed to channel the first flow of fluid.

8. The valve adjusting device (1) of claim 7, as well comprising first, second, third and fourth pilot ducts (58, 65, 64, 56), where:
• the first, second and third pilot ducts (58, 65, 64) are connected between the inlet duct (54) and the lower chamber (60) and cause a pressure in the lower chamber (60) which pushes the piston (26) back to the closed position, and
• the fourth pilot duct (56) is connected between the triggering component (8) and the second pilot duct (65) in order to channel the first flow of fluid to the triggering component (8).

9. The valve adjusting device (1) of claim 1, wherein the triggering component (8) comprises a triggering piston (72) moving in a reaming along a second axis (76) approximately perpendicular to the first axis (7), and between a first position that turns off the first flow of fluid and a second position that turns on the first flow up to the upper chamber (33).

10. The valve adjusting device (1) of claim 9, as well comprising a duct (78) connected between the triggering component (8) and the upper chamber (33) to channel the first flow of fluid up to the upper chamber (33).

11. An activation method of a valve adjusting device (1) in order to release a fluid under a pressure about constant during a predetermined period of time, the valve adjusting device (1) comprising a valve body (2) having an inlet section (6) connected to a tank (3) dedicated to a fluid under pressure and an outlet (4) connected to a piping system, a piston (26) moving in the valve body (2) between a position allowing a circulation of fluid between the inlet section (6) and the outlet (4), and a closed position interrupting said circulation of fluid, a cavity (24) stretching along the first axis and designed to house the piston (26) in the valve body (2), a spring (28) in the cavity (24), designed to exert a return force on the piston (26) to push the piston (26) back to the open position, and a triggering component (8) coupled with the valve body (2), the method comprising:
• the fluid supplying from a tank (3) to a lower chamber (60) located between an internal wall of the cavity (24) and the piston (26) to exert a force that pushes the piston (26) to a close position;
• the activation of the triggering component (8) to cause the inflow of a first flow of fluid, through a way outside the cavity (24), in an upper chamber (33), delimited by an upper wall of the cavity (24) and a median section (38) of the piston (26) to increase a first pressure in the upper chamber (33) until it is approximately equal to the pressure of the tank (3); and
• the moving of the piston (26) to the open position in order to cause the running of a principal flow of fluid from the inlet section (6) through an intermediate chamber (41) up to the outlet (4), wherein the intermediate chamber (41) is delimited by the median section (38) and a sealing section (42) of the piston (26).

12. The method of claim 11, as well comprising a pressure increase in the intermediate chamber (41), said pressure acting against said moving of the piston (26) to the open position and tending to close the valve adjusting device (1).

13. The method of claim 12, wherein the tendency to close the valve adjusting device (1) causes a pressure decrease in the intermediate chamber (41), so the piston (26) is moving again to the open position.

## Patentansprüche

1. Eine Ventileinheit (1) mit
einem Ventilkörper (2), der über einen Einlassbereich (6) für den Anschluss an einen Behälter (3) mit einer unter Druck stehenden Flüssigkeit und einen Auslass (4) für den Anschluss an ein Rohrleitungssystem verfügt,
einem beweglichen Kolben (26) entlang einer ersten Achse (7) im Ventilkörper (2), der eine Position zwischen einer offenen Position, in der der Austausch von Flüssigkeit zwischen dem Einlass (6) und dem Auslass (4) möglich ist, und einer geschlossenen Position, die diesen Austausch verhindert, einnimmt, wobei der Kolben (26) ein Endstück (34), ein Dichtungsstück (42) und ein Mittelstück (38), das zwischen dem Endstück (34) und dem Dichtungsstück (42) liegt, hat,
einer Ventilpfanne (24), die entlang der ersten Achse verläuft und der Aufnahme des Kolbens (26) im Ventilkörper (2) dient,
einer Feder (28) in der Ventilpfanne (24), die eine Rückstellkraft auf den Kolben (26) ausübt, um den Kolben (26) wieder in die offene Position zu bringen, und
einem Antriebsmittel (8), das an den Ventilkörper (2) gekoppelt ist,
**dadurch gekennzeichnet, dass**
die Ventilpfanne (24) über eine obere Kammer (33) zwischen dem Endstück (34) und dem Mittelstück (38), eine Zwischenkammer (41) zwischen der mittleren Kammer (38) und dem Dichtungsstück (42) sowie eine untere Kammer (60) zwischen einer Wandung der Pfanne (24) und dem Dichtungsstück (42) verfügt,
der Kolben (26) dazu dient, einen Austausch von Flüssigkeit zwischen den Kammern (33, 41, 60) zu verhindern,
die Feder (28) sich in der oberen Kammer (33) befindet und das Antriebsmittel (8) dazu dient, nach einem ersten Durchfluss von Flüssigkeit außerhalb der Pfanne (24) zwischen dem Einlass (6) und der oberen Kammer (33) eine Betätigung auszuführen, wobei der erste Durchfluss eine Steigerung des Drucks in der oberen Kammer (33) bewirkt, sodass der Druck in etwa dem im Behälter (3) entspricht, damit die Kraft der Feder den Kolben (26) in die offene Position bewegt; in der offenen Position fließt jedoch ein Hauptfluss der Flüssigkeit vom Einlass (6) durch die Zwischenkammer (41) bis zum Auslass (4).

2. Ventileinheit (1) gemäß Anspruch 1, bei der der Kolben (26) einen massiven Schaft enthält.

3. Ventileinheit (1) gemäß Anspruch 2, in der das Dichtungsstück (42) ein auf einen massiven Schaft montiertes Polymerteil enthält.

4. Ventileinheit (1) gemäß Anspruch 1, in der sich im Einlass (6) ein Rohr (12) befindet, das entlang der ersten Achse verläuft und den Hauptfluss steuert.

5. Ventileinheit (1) gemäß Anspruch 4, die zusätzlich einen ersten und zweiten Hauptkanal (62, 66) zwischen dem Rohr (12) und der Zwischenkammer (41) aufweist, um den Hauptfluss zu steuern.

6. Ventileinheit (1) gemäß Anspruch 5, in der sich am Rohr (12) sechs Öffnungen befinden, die jeweils mit einem der Kanäle für den ersten Hauptfluss (66) verbunden sind.

7. Ventileinheit (1) gemäß Anspruch 4, in der der Einlass (6) einen Einlasskanal (54) aufweist, der entlang des Rohrs (12) verläuft und dazu dient, den ersten Flüssigkeitsdurchfluss zu steuern.

8. Ventileinheit (1) gemäß Anspruch 7, die zusätzlich einen ersten, zweiten, dritten und vierten Steuerkanal (58, 65, 64, 56) beinhaltet, wobei der erste, zweite und dritte Steuerkanal (58, 65, 64) den Einlasskanal (54) mit der unteren Kammer (60) verbinden und eine Druckerhöhung in der unteren Kammer (60) verursachen, durch die der Kolben (26) in die geschlossene Position bewegt wird, und wobei der vierte Steuerkanal (56) das Antriebsmittel (8) mit dem zweiten Steuerkanal (65) verbindet, um den ersten Flüssigkeitsdurchfluss zum Antriebsmittel (8) zu leiten.

9. Ventileinheit (1) gemäß Anspruch 1, in der das Antriebsmittel (8) einen beweglichen Betätigungskolben (72) in einer Bohrung entlang einer zweiten Achse (76) enthält, die etwa rechtwinklig zur ersten Achse (7) steht, und in der dieser Kolben eine Position zwischen einer ersten Position, die den ersten Durchfluss von Flüssigkeit unterbricht, und einer zweiten Position, die den ersten Durchfluss von Flüssigkeit in die obere Kammer (33) zulässt, einnimmt.

10. Ventileinheit (1) gemäß Anspruch 9, die zusätzlich einen Kanal (78) enthält, der das Antriebsmittel (8) und die obere Kammer (33) verbindet, um den ersten Flüssigkeitsdurchfluss in die obere Kammer (33) zu leiten.

11. Verfahren, durch das eine Ventileinheit (1) in Betrieb gesetzt wird, damit eine Flüssigkeit mit etwa konstantem Druck während einer vorherbestimmten Zeitspanne ausgeleitet wird, wobei die Ventileinheit (1) einen Ventilkörper (2) mit einem Einlass (6), der mit einem Behälter (3) für eine unter Druck stehende Flüssigkeit verbunden ist, sowie einen Auslass (4), der an ein Rohrleitungssystem angeschlossen ist, einen beweglichen Kolben (26) im Ventilkörper (2), der eine Position, in der ein Flüssigkeitsaustausch zwischen dem Einlass (6) und dem Auslass (4) möglich ist, oder eine geschlossene Position, die diesen Austausch verhindert, einnehmen kann, eine Pfanne (24), die entlang der ersten Achse verläuft und den Kolben (26) im Ventilkörper (2) aufnimmt, eine Feder (28) in der Pfanne (24), die eine Rückstellkraft auf den Kolben (26) ausübt, um den Kolben (26) in die offene Position zurück zu bewegen und ein Antriebsmittel (8), das an den Ventilkörper (2) gekoppelt ist, beinhaltet, und wobei das Verfahren folgendes enthält:
Zufuhr von Flüssigkeit aus dem Behälter (3) in die untere Kammer (60), die sich zwischen einer inneren Wandung der Pfanne (24) und dem Kolben (26) befindet, um eine Kraft auszuüben, die den Kolben (26) in die geschlossene Position bewegt;
Aktivierung des Antriebsmittels (8), um den Eintritt eines ersten Flüssigkeitsdurchflusses zu verursachen, entlang eines Weges außerhalb der Pfanne (24) in die obere Kammer (33), begrenzt durch eine obere Wandung der Pfanne (24) und ein Mittelstück (38) des Kolbens (26), um eine erste Steigerung des Drucks in der oberen Kammer (33) zu erreichen, bis dieser etwa dem Druck im Behälter (3) entspricht; und
Bewegung des Kolbens (26) in die offene Position, um den Hauptdurchfluss einer Flüssigkeit vom Einlass (6) über eine Zwischenkammer (41) bis zum Auslass (4) zu bewirken, wobei die Zwischenkammer (41) vom Mittelstück (38) und dem Dichtungsstück (42) des Kolbens (26) begrenzt wird.

12. Verfahren nach Anspruch 11, das zusätzlich eine Druckerhöhung in der Zwischenkammer (41) bewirkt, wobei die Druckerhöhung gegen die genannte Bewegung des Kolbens (26) in die offene Position wirkt und dazu dient, die gesamte Ventileinheit (1) zu schließen.

13. Verfahren gemäß Anspruch 12, wobei der Vorgang der Schließung der Ventileinheit (1) eine Verringerung des Drucks in der Zwischenkammer (41) bewirkt, sodass der Kolben (26) sich erneut in die offene Position bewegt.
